# FASCICULE DE BREVET EUROPEEN

(11) **EP 2 045 033 B1**
(45) Date de publication et mention de la délivrance du brevet: **23.02.2011**
(21) Numéro de dépôt: 08165849.4
(22) Date de dépôt: 03.10.2008
(51) Int. Cl.: B23K 1/00, B23K 1/005, B23K 1/008, B23K 26/34

(54) **Procédé de retouche de pièces métalliques**
Retuschierverfahren für Metallteile
Method for touching up metal parts

(30) Priorité: 05.10.2007 FR 0707011
(43) Date de publication de la demande: 08.04.2009
(73) Titulaire: SNECMA, 75015 Paris (FR)
(72) Inventeur: Causte, Eric, Yves, Roger, 77140 Nemours (FR); Flesch, Thierry, Jean, Emile, 77310 Pringy (FR); Gueguen, Mathieu, 75012 Paris (FR); Prodent, James, 91490 Oncy sur Ecole (FR)
(74) Mandataire: David, Daniel

(56) Documents cités:
- EP-A- 1 424 158
- WO-A-2005/030429

## Description

L'invention concerne le brasage de pièces métalliques et, plus particulièrement, la retouche de brasures.

Le brasage consiste à lier solidairement deux pièces métalliques dans une position de contact surfacique au moyen d'un métal d'apport que l'on chauffe, le métal d'apport ayant une température de fusion inférieure à celles des pièces à assembler.

Lors de la liaison de deux pièces métalliques par brasage dans un four, des défauts peuvent apparaître sur les pièces. Il est alors nécessaire de « reprendre » la brasure ; c'est-à-dire de retoucher les défauts de brasure. La « reprise » de brasure consiste à faire fondre le joint de brasure en comblant les manques de matière avec le métal d'apport utilisé pour la brasure initiale.

Cependant, un second cycle de brasage au four comporte un certain nombre de risques. Parfois, on constate une déformation géométrique de l'assemblage, une dégradation des propriétés intrinsèques des matériaux ou bien l'apparition de nouveaux défauts entraînant, le cas échéant, la mise au rebut.

En ce qui concerne plus particulièrement le brasage de pièces aéronautiques, des passages au four à haute température répétés diminuent la durée de vie des pièces.

Par ailleurs, les mêmes fours sont utilisés lors du brasage et lors de la reprise de brasure, ce qui diminue la cadence de production des assemblages. Comme le four de chauffage n'est utilisé que pour des lots de pièces, il est nécessaire d'attendre d'avoir un nombre suffisant de pièces défectueuses avant de pouvoir effectuer les réparations, ce qui allonge d'autant les cycles de production.

Il est également connu de retoucher les défauts par soudage à l'arc (TIG). Cependant, ce type de chauffage à forte puissance peut entraîner des déformations qui ne peuvent pas être reprises, l'assemblage devant alors être mis au rebut.

Le document EP-A-1 424 158 décrit un procédé de retouche par laser en mode continu. Une retouche en mode pulsé est connue du document WO-A-2005 0 30429, la puissance de crête étant de 6 à 10 kW.

Afin de pallier ces défauts, la demanderesse propose un procédé de retouche de pièces métalliques assemblées par brasage à hautes températures, dans lequel on retouche les zones brasées au moyen d'un laser de retouche dont la puissance crête du laser de retouche est comprise entre 1500 et 3000W, le laser de retouche étant utilisé en mode pulsé.

La reprise de pièces métalliques au moyen d'un laser de retouche permet de limiter localement la zone affectée thermiquement (ZAT) de la pièce. Ce type de laser est traditionnellement utilisé pour des opérations de soudage, en particulier dans la domaine de la joaillerie pour des pièces de petite dimension, ou pour le rechargement de moule.

Un tel laser permet d'effectuer des retouches avec des pièces brasées à hautes températures.

Contrairement au soudage laser qui nécessite une énergie importante, la retouche laser de brasure est réalisée à faible puissance avec un apport d'énergie localisé.

L'utilisation du laser en mode pulsé permet avantageusement de limiter les déformations de la pièce et dans le cas des redresseurs de compresseur haute pression de ne pas impacter la géométrie de l'aube. De plus, la consommation d'énergie du laser en mode pulsé est considérablement plus faible en comparaison d' un fonctionnement en mode continu.

La retouche des zones brasées est réalisée avec ou sans métal d'apport déposé sur les zones brasées.

Le métal d'apport, au contact du faisceau laser de retouche, fond sur la zone brasée afin de venir combler les défauts de brasure de la pièce, le métal d'apport se présentant sous la forme de poudre, de pâte ou de fil. Le métal d'apport est choisi de façon à être compatible avec le métal d'apport utilisé pour le brasage initial.

De préférence, le laser de retouche à faible puissance est utilisé en mode pulsé, le temps de montée de l'impulsion laser étant inférieur à son temps de descente pour des pièces métalliques à base nickel ou cobalt.

De préférence, on protège les pièces métalliques assemblées contre l'oxydation au moyen d'un dispositif de protection gazeuse contre l'oxydation.

D'autres caractéristiques et avantages ressortiront de la description qui suit du procédé de l'invention en référence aux figures sur lesquelles :
- la figure 1 est une photo d'une portion de secteur d'un redresseur de compresseur haute pression (HP) dans lequel on aperçoit une zone brasée à retoucher entre une aube de redresseur et une couronne interne;
- la figure 2 représente schématiquement le procédé de retouche de la zone brasée de la figure 1 avec un laser de retouche à faible puissance ; et
- la figure 3 représente la forme d'impulsion du signal émis par le laser de retouche à faible puissance de la figure 2.

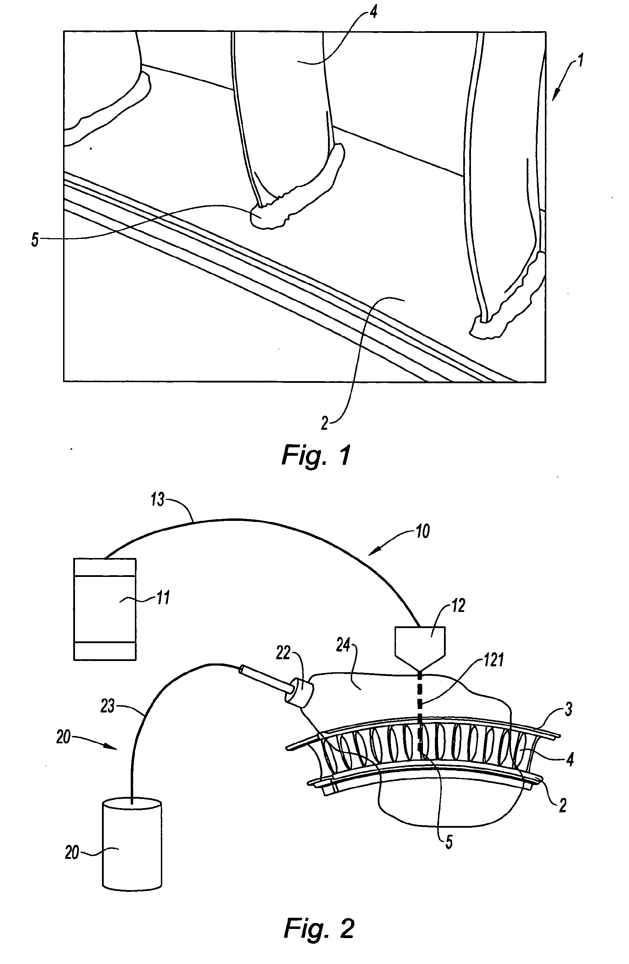

En référence à la figure 1, un secteur de redresseur 1 de compresseur HP de turbomoteur comprend des aubes de redresseur 4 fixées entre une couronne interne 2 et une couronne externe 3 (voir figure 2). Les aubes de redresseur 4 sont liées aux couronnes 2, 3 lors d'une opération de brasage. En référence à la figure 1, un défaut de matière 5 est apparent sur la zone brasée à l'interface entre l'aube 4 et la couronne 2. Un tel défaut entraîne une modification des propriétés aérodynamiques de l'aube 4 et l'assemblage présente un risque de rupture important. La reprise de la brasure est donc nécessaire.

En référence à la figure 2, la brasure défectueuse 5 est retouchée pour en éliminer les creux et imperfections au moyen d'un laser de correction ou de retouche 10 du type Nd-YAG, comportant une tête d'émission 12 reliée par une fibre optique 13 à une source laser 11. Une telle fibre permet une manipulation aisée de la tête d'émission 12 par rapport à la source laser 11.

La tête d'émission laser 12 est amenée manuellement au-dessus du défaut 5 de telle façon que le faisceau laser 13, issu de la tête d'émission 12, fasse fondre le la brasure et disparaître le défaut 5.

Pour combler le manque de matière, la retouche de brasure est ici réalisée avec l'apport d'un métal, non représenté, se présentant sous la forme d'un fil dont le diamètre est compris entre 0,3 mm et 0,8 mm, et qui est amené sur le défaut 5 pour être fondu lors du passage du laser de retouche 10. Il va de soi qu'un métal d'apport sous la forme d'une poudre, d'une pâte de même qu'une préforme frittée conviendrait également. Ce deuxième métal d'apport n'est pas nécessairement le même que celui utilisé pour la brasure initiale, un métal d'apport compatible avec le métal initial est suffisant.

Ainsi, pour une brasure initiale réalisée avec un métal d'apport de base nickel/chrome, nickel/palladium ou métaux précieux, on peut utiliser un deuxième métal d'apport sous forme de fil Or/Nickel (Au-Ni) ou de fil base nickel.

Avant chaque opération de retouche, la pièce doit être nettoyée et dégraissée afin d'éviter une pollution de la brasure et l'introduction de défauts.

Le laser de retouche 10 est ici commandé de manière semi manuelle, un robot ou une machine cartésienne guidant la tête d'émission laser 12 à distance de l'utilisateur tandis que ce dernier manipule le métal d'apport. Il va de soi qu'une manipulation manuelle ou entièrement automatisée pourrait également convenir.

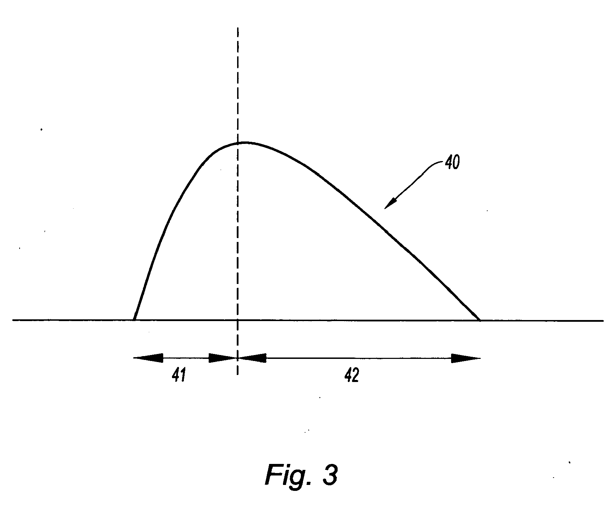

Le laser est utilisé à faible puissance et pour une plage de fréquence comprise entre 4 et 8 Hz limitant ainsi l'échauffement de la pièce. En référence à la figure 3, le laser 10 est utilisé en mode pulsé et transmet des impulsions laser 40 à intervalles réguliers ayant une puissance crête comprise entre 1500W et 3000W. Les impulsions 40 ne sont pas symétriques, le temps de montée en puissance du laser 41 étant inférieur au temps de descente en puissance 42. Le temps de montée en puissance 41 est ici de 2-5 ms et le temps de descente en puissance 42 est de 10-12 ms, le temps d'impulsion global étant compris entre 5 et 15ms.

Une montée rapide 41 et une descente lente 42 permettent de limiter les gradients thermiques dans la pièce, une différence de température importante entre deux zones proches augmentant le risque de fissures. Ce type d'impulsion 40 est particulièrement adapté aux brasures à base de nickel, qui sont fragiles et pour lesquelles il est nécessaire de relâcher les contraintes.

Cependant, il va de soi que l'on peut adapter la forme du signal pour d'autres alliages. Ainsi, pour un alliage du type NC22FeD à base de Nickel, une impulsion avec une montée lente et une descente rapide conviendrait mieux. Pour éviter l'apparition de fissures, on privilégie la durée de l'impulsion laser à la puissance crête de l'impulsion.

Le laser est utilisé sous une atmosphère de protection contre l'oxydation 24 entretenue par un dispositif de protection gazeuse contre l'oxydation 20. Le gaz antioxydant est conduit d'une source de gaz 21 à une buse de diffusion 22 par l'intermédiaire d'une conduite de gaz 23.

L'atmosphère de protection 24 entoure la zone de reprise de brasure afin d'empêcher l'oxydation de la pièce lorsqu'on effectue la retouche, une oxydation entraînant une diminution du cycle de vie de la pièce. On utilise ici une buse de diffusion 22 de grand diamètre, compris entre 20 et 30 mm, identique à celles utilisées dans les procédés de soudage à l'arc TIG. De tels buses permettent un écoulement fluide sur une zone relativement vaste par comparaison aux buses de protection utilisées traditionnellement pour le soudage laser.

## Revendications

1. Procédé de retouche de pièces métalliques (2,3) assemblées par brasage à hautes températures, dans lequel on retouche les zones brasées (5) au moyen d'un laser de retouche, **caractérisé par le fait que** la puissance crête du laser de retouche (10) est comprise entre 1500 et 3000W, le laser de retouche (10) étant utilisé en mode pulsé.

2. Procédé selon la revendication 1, dans lequel la retouche des zones brasées (5) est réalisée avec un métal d'apport déposé sur les zones brasées (5).

3. Procédé selon la revendication 2, dans lequel le métal d'apport se présente sous la forme de poudre, de pâte, de fil ou de préforme fritté.

4. Procédé selon l'une des revendications 2 à 3, dans lequel le métal d'apport est compatible avec le métal d'apport utilisé lors du brasage initial des pièces métalliques (2, 3).

5. Procédé selon l'une des revendications 1 à 4, dans lequel le laser de retouche (10) est commandé de manière semi manuelle.

6. Procédé selon l'une des revendications 1 à 5, dans lequel les pièces métalliques (2,3) sont en alliage à base nickel ou cobalt.

7. Procédé selon l'une des revendications 1 à 6, dans lequel le temps de montée de l'impulsion laser (41) est inférieur à son temps de descente (42).

8. Procédé selon l'une des revendications 1 à 7, dans lequel les pièces métalliques (2,3) ont été assemblées par brasage au four.

9. Procédé selon l'une des revendications 1 à 8, dans lequel le temps d'impulsion du laser de retouche (10) est compris entre 5 et 15ms.

10. Procédé selon l'une des revendications 1 à 9, dans lequel la fréquence du laser de retouche (10) est comprise entre 4 et 8Hz.

11. Procédé selon l'une des revendications 1 à 10, dans lequel on protège les pièces métalliques brasées (2,3) contre l'oxydation au moyen d'un dispositif de protection gazeuse contre l'oxydation (20).

## Claims

1. A method for altering metal parts (2, 3) assembled by high temperature soldering, wherein the soldered areas (5) are altered by means of an altering laser, **characterised in that** the peak power of the altering laser (10) is between 1500 and 3000W, the altering laser (10) being used is pulsed mode.

2. The method according to claim 1, wherein altering of the soldered areas (5) is carried out with a solder deposited onto the soldered areas (5).

3. The method according to claim 2, wherein the solder is in a form of a sintered powder, paste, wire or preform.

4. The method according to any of claims 2 to 3, wherein the solder is compatible with the solder used during the initial soldering of the metal parts (2, 3).

5. The method according to any of claims 1 to 4, wherein the altering laser (10) is semi-manually controlled.

6. The method according to any of claims 1 to 5, wherein the metal parts (2, 3) are of a nickel or cobalt based alloy.

7. The method according to any of claims 1 to 6, wherein the raise time of the laser impulse (41) is lower than the fall time (42) thereof.

8. The method according to any of claims 1 to 7, wherein the metal parts (2, 3) have been assembled by furnace soldering.

9. The method according to any of claims 1 to 8, wherein the impulse time of the altering laser (10) is between 5 and 15ms.

10. The method according to any of claims 1 to 9, wherein the frequency of the altering laser (10) is between 4 and 8 Hz.

11. The method according to any of claims 1 to 10, wherein the soldered metal parts (2, 3) are protected from oxidation by means of a gas protection device (20) against oxidation.

## Patentansprüche

1. Retuschierverfahren für Metallteile (2, 3), zusammengebaut durch Hartlöten, wobei die gelöteten Bereiche (5) mit Hilfe eines Retuschierlasers retuschiert werden, **dadurch gekennzeichnet, dass** die Spitzenleistung des Retuschierlasers (10) zwischen 1500 und 3000 W liegt, wobei der Retuschierlaser (10) im gepulsten Betrieb verwendet wird.

2. Verfahren nach Anspruch 1, wobei das Retuschieren der gelöteten Bereiche (5) mit einem Zusatzmetall durchgeführt wird, das auf den gelöteten Bereichen (5) abgelagert wird.

3. Verfahren nach Anspruch 2, wobei das Zusatzmetall die Form eines Pulvers, einer Paste, eines Drahts oder einer gesinterten Vorform aufweist.

4. Verfahren nach einem der Ansprüche 2 bis 3, wobei das Zusatzmetall mit dem Zusatzmetall kompatibel ist, das beim ursprünglichen Löten der Metallteile (2, 3) verwendet wurde.

5. Verfahren nach einem der Ansprüche 1 bis 4, wobei der Retuschierlaser (10) auf halbmanuelle Weise gesteuert wird.

6. Verfahren nach einem der Ansprüche 1 bis 5, wobei die Metallteile (2, 3) aus einer Legierung basierend auf Nickel oder Kobalt bestehen.

7. Verfahren nach einem der Ansprüche 1 bis 6, wobei die Anstiegszeit des Laserimpulses (41) geringer als seine Abfallszeit (42) ist.

8. Verfahren nach einem der Ansprüche 1 bis 7, wobei die Metallteile (2, 3) durch Ofenlöten zusammengebaut wurden.

9. Verfahren nach einem der Ansprüche 1 bis 8, wobei die Impulszeit des Retuschierlasers (10) zwischen 5 und 15 ms liegt.

10. Verfahren nach einem der Ansprüche 1 bis 9, wobei die Frequenz des Retuschierlasers (10) zwischen 4 und 8 Hz liegt.

11. Verfahren nach einem der Ansprüche 1 bis 10, wobei die gelöteten Metallteile (2, 3) mit Hilfe einer Schutzgasvorrichtung gegen die Oxidation (20) gegen die Oxidation geschützt werden.
